Europäisches Patentamt

European Patent Office

Office européen des brevets

(11) Publication number: **0 685 722 A2**

# EUROPEAN PATENT APPLICATION

(21) Application number: **95108236.1**

(22) Date of filing: **29.05.95**

(51) Int. Cl.⁶: **G01M 11/00**

(30) Priority: **30.05.94 IT TO940443**

(43) Date of publication of application:
**06.12.95 Bulletin 95/49**

(84) Designated Contracting States:
**DE FR GB IT NL SE**

(71) Applicant: **CSELT Centro Studi e Laboratori Telecomunicazioni S.p.A.**
**Via Guglielmo Reiss Romoli, 274**
**I-10148 Turin (IT)**

(72) Inventor: **Artiglia, Massimo**
**Via Alasonatti, 6**
**Torino (IT)**
Inventor: **Caponi, Renato**
**Via Pigafetta, 6**
**Torino (IT)**
Inventor: **Cisternino, Francesco**
**Via Bianzé, 39**
**Torino (IT)**
Inventor: **Naddeo, Claudio**
**Via Chieri, 20/3**
**Pino Torinese (Torino) (IT)**
Inventor: **Roccato, Diego**
**C.so Peschiera, 260**
**Torino (IT)**

(74) Representative: **Riederer Freiherr von Paar zu Schönau, Anton et al**
**Van der Werth, Lederer & Riederer**
**Postfach 2664**
**D-84010 Landshut (DE)**

(54) Method of measuring the nonlinear refractive index in a single-mode optical fibre.

(57) To measure the nonlinear refractive index of an optical fibre, each pulse emitted by a source (L) is split into a pair of pulses which are sent in opposite directions into an optical-fibre Sagnac interferometric loop (AS) which includes the fibre under test (F). One of the pulses of the pair is attenuated before passing through the fibre (F) in such a way that only the other one has such a power as to induce nonlinear effects in the fibre (F). The interference between parts of pulses is analysed at the output of the loop (AS) and the nonlinear refractive index is derived from a measurement of the phase shift between the two pulses of the pair.

Fig. 1

EP 0 685 722 A2

The invention described herein relates to the characterisation of optical fibres and in particular it concerns a method of measuring the nonlinear refractive index in a single-mode optical fibre, by means of interferometric techniques.

In most materials of interest for optical communications, the main nonlinear phenomenon that may affect refractive index is the optical Kerr effect, whose influence on the index is described by the formula:

$$n(I) = n_0 + n_2 I \qquad (1)$$

where $n(I)$ is the refractive index as a function of intensity I (and therefore also of the power) of the radiation sent into the fibre, $n_0$ is the linear refractive index (constant), whilst $n_2$ is the so-called nonlinear coefficient of the refractive index (hereinafter called more simply "nonlinear refractive index").

With the introduction of optical amplifiers into optical communication systems, the powers transmitted along a fibre render nonlinear effects related with $n_2$ no longer negligible: since these effects may significantly degrade the performance of a system or, conversely, they may be exploited to realise new technical solutions, the accurate knowledge of nonlinear refractive index $n_2$ in optical fibres, at the typical operating wavelengths of optical communications, is becoming more and more important.

Several methods for measuring $n_2$ are known, and the most accurate ones are based on interferometric techniques.

An example is provided by M. Monerie and Y. Durtese in the paper "Direct interferometric measurement of nonlinear refractive index of optical fibres by crossphase modulation", Electronics Letters, No. 18, 1987, pages 961-963. This paper describes a measuring device that makes use of a Mach-Zehnder interferometer with two arms of different length, one of them being an air path and the other one containing the fibre under test. A beam of a radiation emitted by a first radiation source is split into two partial beams which are recombined after having been respectively sent into the two arms of the interferometer. If a pump pulse emitted by an additional source is sent into such a system in the opposite direction with respect to the beam emitted by the first source, the refractive index of the core of the fibre under test increases and a variation is observed in the level of interference between the beams travelling along different paths: that variation is represented by the relative phase shift which is directly proportional to the nonlinear coefficient of the refractive index to be measured.

The above technique has several drawbacks. In particular, the measurement is sensitive to the relative orientation of the polarisations of the two radiations, which is a statistical phenomenon whose influence on the final result may be assessed only by applying some simplifying hypotheses, which in turn generally depend also on the launch conditions of the pulses. Moreover, there are systematic errors due to the fact that the apparatus is not self-compensated with respect to environmental disturbances of thermal and mechanical nature, since the radiations run along their respective paths in just one direction.

These problems are solved by the measuring technique described by J.E. Meier and W.E. Heinlein in the paper "Improved self-compensated interferometer method to measure the effective nonlinearity of an Er-doped fibre", presented at the Optical Fibre Measurement Conference '93, Turin, 21-22 September 1993, published in Technical Digest, pages 125-128. In particular, each pulse emitted by a source is split into two pulses which travel along paths of different lengths forming the two arms of a Mach-Zehnder interferometer, one of said arms (e.g. the longer one) including a variable attenuator. At the end of the two different paths, a pair of pulses are obtained having an adjustable power difference and a certain time delay with respect to each other; these two pulses are sent into the fibre under test. At the end of the fibre, the aforesaid pair of pulses undergo reflection and the reflected pulses, when coming out of the input end of the fibre, are split again and sent along the same path travelled by the pair of pulses on the forward run. Thus, a triplet of pulses is obtained, of which a first one has travelled the short path twice, a second one has travelled the long path twice and a central one is the coherent superposition of two pulses that have travelled the long path once and the short path once. By choosing a suitable value of the attenuation introduced by the variable attenuator, clear interference patterns are obtained in the central part of the central pulse; from these interference patterns it is possible to derive $n_2$. Side peaks have to be eliminated.

The use of a single source eliminates the problems connected with polarisation, while the fact that the pulses used for the measurement travel in both directions along the measurement apparatus and the fibre makes the apparatus self-compensated with respect to environmental disturbances of thermal and mechanical nature. The apparatus described above, however, turns out to be quite complex, it uses various parts that are not made by optical fibres and the accuracy of the measurement depends on the duration of the pulses utilised, since that parameter determines the sizes of the side peaks, which have to be as spaced apart from the central peak as possible in order to be eliminated without affecting the latter, which represents the useful signal.

The object of the present invention is the realisation of a measuring system that is self-compensated like the double-pass technique described above, but that: has a simpler structure, because it does not require a double travel along the interferometer utilised; is completely realised in single-mode optical fibre; and allows the use of pulses of any duration, provided the duty cycle is high enough, thus allowing the measurement of $n_2$ with arbitrary time resolution, at least in principle.

According to the invention, a method is provided of measuring the nonlinear refractive index of an optical fibre, wherein the interference is analysed between pairs of pulses of which only one has such a power as to induce nonlinear effects in the fibre, and the nonlinear refractive index is obtained from a measurement of the phase shift between the two pulses of the pair, and wherein the pulses of the pair are made to interfere after propagation along a same path which includes the fibre under test and which is made by an optical-fibre Sagnac interferometric loop into which the pulse emitted by a source is sent in both directions, one of the pulses of the pair being attenuated within the loop before passing into the fibre under test.

The paper "Nonlinear-optical loop mirror" by N. J. Doran and D. Wood, Optics Letters, Vol. 13, No. 1, January 1988, page 56 and ff., describes the possibility of exploiting the different nonlinear phase shift of two pulses with different powers that propagate in opposite directions along an optical-fibre Sagnac interferometric loop to obtain a switching device. The two pulses are obtained by means of an unbalanced X-coupler on whose outputs the fibre loop is closed. The paper provides no indication about the possibility of using a device of this sort to measure the nonlinear refractive index; on the other hand, the device could not provide interference fringes at the two outputs as it is designed to operate with solitonic pulses, which must be 100% switched on either output.

The characteristics of the present invention will be made more apparent by the following description and by the enclosed drawing relating to a nonlimiting exemplary embodiment. In the drawings:
- Figure 1 represents the preferred embodiment of the measuring device on which the described method is based, and
- Figure 2 represents a possible variant embodiment of said device.

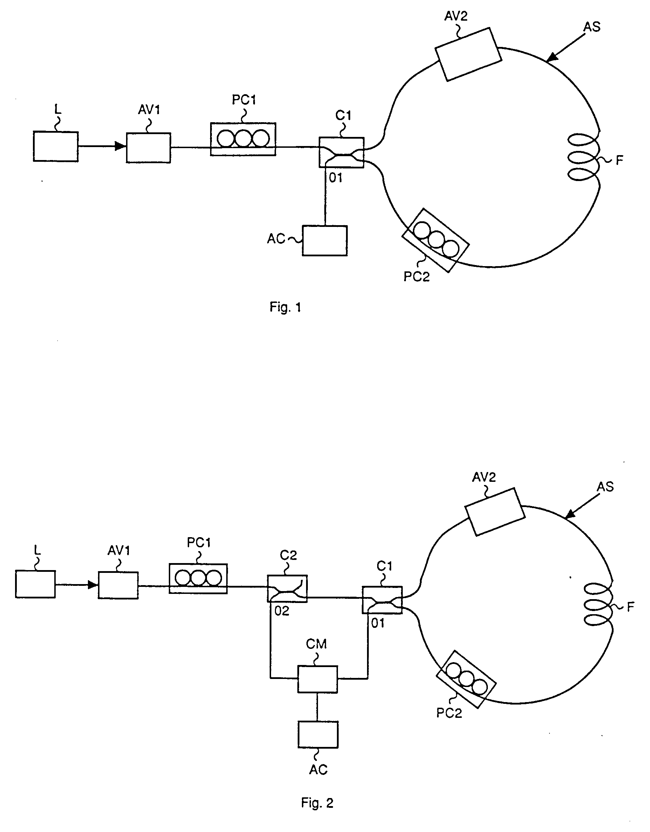

In Figure 1, a source of high power pulses, typically a laser L, emits a sequence of pulses that is made to pass in a variable attenuator AV1 and is then split into two identical pulse trains by means of a coupler, indicated by C1. On said coupler there are closed the two ends of an optical-fibre Sagnac interferometric loop, indicated by AS, including the fibre under test F. The propagation of the pulses between the source and C1 occurs in optical fibre. A polarisation control device PC1 allows to send radiations with a desired polarisation into loop AS, if one wishes to.

If one desires to utilise very short pulses, the source will have to emit a radiation whose wavelength is as close as possible to that corresponding to zero dispersion in fibre F.

The two pulse trains propagate in opposite directions along the loop and one of the two pulse trains is heavily attenuated in a variable attenuator AV2 before entering fibre F. The other train goes through a second polarisation control device PC2, which compensates the birefringence of loop AS and in particular, under linear propagation conditions, makes all the power associated to the pulses that recombine after propagating along the loop come out of port O1 of coupler C1. Attenuator AV2 can be realised by means of a coupler with highly unbalanced splitting ratio between the two outputs (e.g. from 90:10 to 99:1). Attenuating a pulse train is necessary to substantially prevent the pulses from bringing about nonlinear effects in the fibre, so that they undergo a substantially negligible self-phase modulation. Conversely, the other pulse train goes through the same attenuator AV2 after having undergone nonlinear propagation through fibre F. Thus, the pulses returning to C1 have the same intensity and only one of them shows a significant phase shift due to self-phase modulation. The pulses that have travelled the loop in both directions are recombined in C1 and are extracted through port O1 of the latter, which is connected to a device for measuring $n_2$, in particular an auto-correlator AC, to characterise, with high time resolution, the interference between the pulse trains propagating in the loop.

More particularly, because of the nonlinear propagation of one of the two pulses recombined in C1, they present a relative phase shift that, taking also into account the small value of the self-phase modulation in the pulse attenuated before going into the fibre, is expressed by the following formula:

$$\Delta\phi(t) = (2\pi n_2/\lambda A_{eff}) \cdot [P_1(t) - P_2(t)] \cdot L_{eff} \qquad (2)$$

where P1(t) and P2(t) are the instant powers of the high and low intensity pulses (i.e. respectively of the one that was not attenuated and the one that was attenuated before going along the fibre), $A_{eff}$ is the effective area of the fibre and $L_{eff}$ is the effective length of the fibre. The meaning of these two quantities is well known to the skilled in the art and it is not necessary to report here the formulas that express them. In the expression above, the effects of cross-phase modulation between the two counter-propagating pulse trains have been neglected. This hypothesis is valid for pulse trains with high duty cycle. Starting from $\Delta\phi$ (determined with auto-correlator AC), $n_2$ can be obtained according to formula (2), provided the effective area and the effective length of the fibre are known.

It must be kept in mind that, due to the nonlinear behaviour, a part of the power associated to the pulses recombined at the end of the loop is reflected by C1 towards the source. In the reflected pulses, the conditions of destructive or constructive interference will be complementary to those existing in the pulses transmitted toward port O1 of C1. This fact is exploited in a variant embodiment of the device described above, represented in Figure 2, which includes, between source L and coupler C1, an additional coupler C2 which has a port O2 that can be connected to auto-correlator AC, in alternative to O1, through a switch CM.

Use of a Sagnac interferometer results in a self-compensated configuration of the measurement apparatus, as in the method described in the paper by J. E. Meier and W. E. Heinlein; yet it offers the advantage that a single pulse is to be analysed, thus avoiding the need of eliminating a high power unwanted pulse and therefore allowing the use of ultra-short pulses.

It is evident that numerous modifications, adaptations, integrations, variations and replacements of elements with others functionally equivalent may be made to the exemplary embodiments described above by way of non-limiting illustration, without departing from the scope of the invention.

**Claims**

1. Method of measuring the nonlinear refractive index of an optical fibre, wherein the interference is analysed between pairs of pulses, of which only one has such a power as to induce nonlinear effects in the fibre, and the nonlinear refractive index is obtained by measuring the phase shift between the two pulses of each pair, characterised in that the pulses of each pair are made to interfere after propagation along the same path that includes the fibre under test and that is made by an optical-fibre Sagnac interferometric loop (AS) into which the pulses emitted by a source (L) are simultaneously sent in both directions, one of the pulses of the pair being attenuated inside the loop before passing through the fibre under test.

2. Method according to claim 1, characterised in that the interference is analysed between the pulses of the pair taken immediately at the output of the loop and the same pulses taken after they have propagated backwards along a section of an optical fibre path connecting the source (L) to the loop (AS).

3. Method according to claim 1 or 2, characterised in that pulses whose wavelength is close to the wavelength of zero dispersion in the fibre are sent into the fibre under test (F).

Fig. 1

Fig. 2